# EUROPÄISCHE PATENTSCHRIFT

(11) **EP 3 798 051 B1**
(45) Veröffentlichungstag und Bekanntmachung des Hinweises auf die Patenterteilung: **22.03.2023**
(21) Anmeldenummer: 20185707.5
(22) Anmeldetag: 14.07.2020
(51) Int. Cl.: B60N 2/60, B60N 2/80

(54) **KOPFSTÜTZEN-SCHONBEZUG**
HEAD SUPPORT PROTECTIVE COVER
HOUSSE DE PROTECTION D'APPUIE-TÊTE

(30) Priorität: 25.09.2019 AT 3022019
(43) Veröffentlichungstag der Anmeldung: 31.03.2021
(73) Patentinhaber: Walser, Hans-Karl, 6845 Hohenems (AT)
(72) Erfinder: Walser, Hans-Karl, 6845 Hohenems (AT)
(74) Vertreter: Torggler & Hofmann Patentanwälte - Rankweil

(56) Entgegenhaltungen:
- WO-A1-97/33767
- DE-U1- 9 412 171
- US-A1- 2002 074 838

## Beschreibung

Die Erfindung bezieht sich auf einen Kopfstützen-Schonbezug für eine Kopfstütze eines Kraftfahrzeugsitzes, mit einer Überzieh-Öffnung zum Überziehen des Schonbezugs über die Kopfstütze, wobei der Schonbezug einen Vorderabschnitt zur Anlage an der Vorderseite der Kopfstütze, einen Rückenabschnitt zur Anlage an der Rückseite der Kopfstütze und linke und rechte Seitenabschnitte zur Anlage an der linken und rechten Schmalseite der Kopfstütze aufweist.

Sackartig ausgebildete Schonbezüge dieser Art sind bekannt. Der Schonbezug wird mit der Überzieh-Öffnung über die Kopfstütze gezogen. Da Kopfstützen in einer Vielzahl von unterschiedlichen Formen in den verschiedenen Automodellen zum Einsatz kommen, müssen viele verschiedene Schonbezüge für Kopfstützen hergestellt und gelagert werden. Dennoch ist bei Kopfstützen-Schonbezügen, die nicht für ein spezielles Kopfstützenmodell ausgebildet sind, die Passform oft unbefriedigend.

Aus der US 2002/0074838 A1 geht ein Überzug hervor, der sowohl als Kopfstützen-Schonbezug, als auch als Sonnenblenden-Bezug einsetzbar ist. Der Bezug weist hierzu an seiner Unterseite eine Überzieh-Öffnung zum Einführen der Kopfstütze und an einer seiner beiden Schmalseite eine seitliche Öffnung zum Einführen der Sonnenblende auf.

Aufgabe der Erfindung ist es, einen vorteilhaften Schonbezug der eingangs genannten Art für eine Kopfstütze bereitzustellen, der sich durch eine sehr gute Anpassbarkeit an die Kopfstützenform auszeichnet. Erfindungsgemäß gelingt dies durch einen Schonbezug für eine Kopfstütze mit den Merkmalen des Anspruchs 1.

Beim Kopfstützen-Schonbezug gemäß der Erfindung weisen die linken und rechten Seitenabschnitte des Schonbezuges, welche zum Überdecken der linken und rechten Schmalseite der Kopfstütze vorgesehen sind, jeweils eine Seiten-Öffnung auf.

Die jeweilige Seiten-Öffnung ist hierbei vorteilhafterweise gegenüber einer mittigen Anordnung im jeweiligen Seitenabschnitt nach unten verschoben.

Gemäß einer ersten möglichen Ausführungsform der Erfindung weist der Stoff des Schonbezuges eine elastische Dehnbarkeit von mindestens 50% in alle Richtungen auf.

Die jeweilige Seiten-Öffnung ist günstigerweise von einer dehnbaren Naht umgeben.

Vorzugsweise ist die jeweilige Seiten-Öffnung von einer Überwendlingnaht umgeben.

In einer alternativen zweiten möglichen Ausführungsform der Erfindung weist ein jeweiliger Seitenabschnitt des Schonbezuges im Bereich des Randes der jeweiligen Seiten-Öffnung einen Tunnelbund auf, durch den eine Schnur oder ein Band verläuft, welches im Gebrauchszustand zu einem Ring geschlossen ist, vorzugsweise mittels eines Verschlusselements. Es kann somit eine zusätzliche Anpassung an die Kopfstützenform durch mehr oder weniger starkes Zusammenziehen des von der Schnur oder vom Band gebildeten Rings erreicht werden. Durch dieses Band oder diese Schnur kann in diesem Ausführungsbeispiel auch die jeweilige Seiten-Öffnung von der Überzieh-Öffnung getrennt sein.

Durch die Erfindung wird eine verbesserte Anpassung an die genaue Form der Kopfstütze erreicht.

Um die Überzieh-Öffnung im Gebrauchszustand zumindest weitgehend zu schließen, ist vorteilhafterweise vorgesehen, dass von einem Rand der Überzieh-Öffnung zumindest eine Lasche absteht, die ein Verschlussteil eines Klettverschlusses bildet und mit einem im Bereich des gegenüberliegenden Randes der Überzieh-Öffnung angeordneten Gegen-Verschlussteil des Klettverschlusses zusammenwirkt.

Wenn im Rahmen dieser Schrift von "vorne" und "hinten" die Rede ist, so ist dies auf die Fahrtrichtung des Kraftfahrzeuges bezogen.

Weitere Vorteile und Einzelheiten der Erfindung werden im Folgenden anhand der beiliegenden Zeichnung erläutert. In dieser zeigen:
- Fig. 1: eine Vorderansicht einer Kopfstütze eines Vordersitzes eines Kraftfahrzeuges mit einem angelegten Schonbezug gemäß einem ersten Ausführungsbeispiel der Erfindung;
- Fig. 2: eine Ansicht von hinten;
- Fig. 3: eine Seitenansicht;
- Fig. 4: eine Ansicht von unten;
- Fig. 5: eine Schrägsicht von schräg unten und der Seite;
- Fig. 6: eine Kopfstütze einer Rücksitzbank eines Kraftfahrzeuges mit einem angelegten Schonbezug gemäß einem zweiten Ausführungsbeispiel der Erfindung, in einer Ansicht von vorne;
- Fig. 7: eine Ansicht von hinten;
- Fig. 8: eine Seitenansicht;
- Fig. 9: eine Ansicht von unten;
- Fig. 10: eine Ansicht von schräg unten und hinten im leicht geöffneten Zustand der Überzieh-Öffnung.

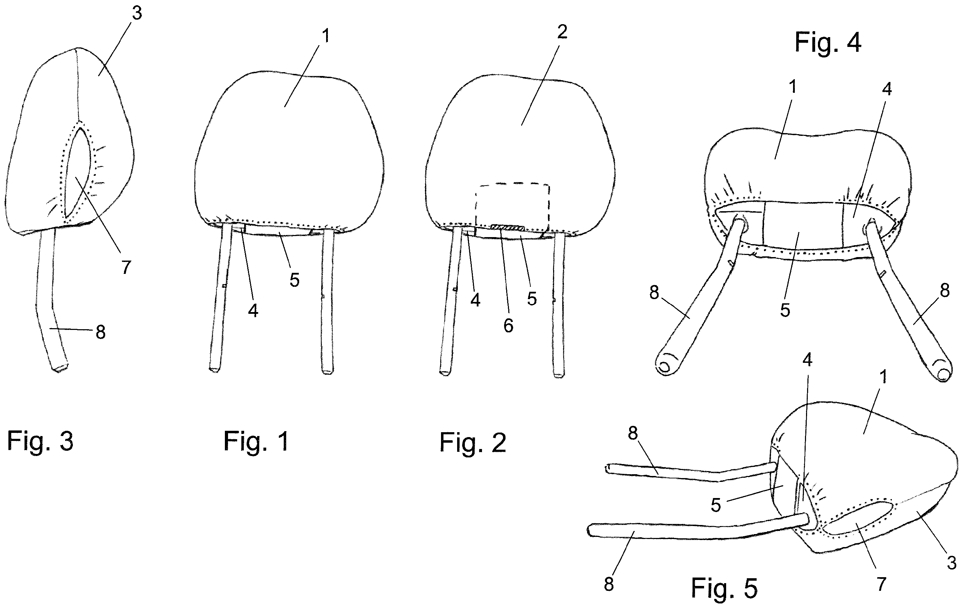

Ein erstes Ausführungsbeispiel eines Kopfstützen-Schonbezugs gemäß der Erfindung ist den Fig. 1 bis 5 dargestellt. Der Schonbezug dieses Ausführungsbeispiels dient zum Beziehen einer Kopfstütze eines Vordersitzes eines Kraftfahrzeugs, insbesondere PKWs. Im Gebrauchszustand überdecken ein Vorderabschnitt 1 des Schonbezuges die Vorderseite der Kopfstütze, ein Rückenabschnitt 2 die Rückseite der Kopfstütze und linke und rechte Seitenabschnitte 3 die linke und rechte Schmalseite der Kopfstütze. Vorzugsweise an der im Gebrauchszustand des Schonbezugs unten liegenden Seite weist der Schonbezug eine Überzieh-Öffnung 4 auf. Der Schonbezug ist damit sackartig ausgebildet. Zum Beziehen der Kopfstütze mit dem Schonbezug wird der Schonbezug mit der Überzieh-Öffnung 4 von oben her auf die Kopfstütze aufgezogen, d. h. die Kopfstützte gelangt durch die Überzieh-Öffnung in das Innere des Schonbezuges.

Der Stoff des Schonbezuges ist elastisch dehnbar ausgebildet. Die elastische Dehnbarkeit beträgt vorzugsweise mehr als 50% in alle Richtungen. D. h. der Stoff ist in alle Richtungen gegenüber dem ungedehnten Zustand um mindestens 50% verlängerbar, wobei der Stoff unbeschädigt bleibt und nach Beendigung der Ausübung der die Verlängerung bewirkenden Zugkraft in seine ursprüngliche Form zurückkehrt.

Die Überzieh-Öffnung 4 ist im Ausführungsbeispiel von einer dehnbaren Naht umgeben, insbesondere einer Überwendlingnaht.

Nähte sind in den Fig. zumindest teilweise durch gepunktete Linien angedeutet.

Denkbar und möglich wäre es auch, um den Rand der Überzieh-Öffnung 4 einen Tunnelbund vorzugsehen und mittels eines Bandes oder einer Schnur einen Tunnelzug auszubilden, wie dies beim zweiten Ausführungsbeispiel weiter unten erläutert wird.

Von einem Längsrand der Überzieh-Öffnung 4 steht eine Lasche 5 ab. Die Verbindung der Lasche 5 mit dem Stoff des Schonbezuges im Randbereich der Überzieh-Öffnung erfolgt vorzugsweise durch Vernähen. Die Lasche 5 bildet zusammen mit dem der Überzieh-Öffnung 4 gegenüberliegenden Randbereich des Schonbezuges einen Klettverschluss. Eines der Verschlussteile des Klettverschlusses, beispielsweise das Vliesteil, wird somit von der Lasche 5 gebildet, beispielsweise durch Ausbildung der Lasche 5 aus einem entsprechenden Material. Das Gegen-Verschlussteil 6 des Klettverschlusses, welches in Fig. 2 angedeutet ist, wird beispielsweise von einem im Randbereich des Stoffes angebrachten, vorzugsweise angenähten Hakenteil gebildet.

Vorzugsweise wird die Lasche 5 nach Überquerung der Überzieh-Öffnung 4 zwischen die Kopfstütze und den Schonbezug eingeschoben (vgl. in Fig. 2 die gestrichelte Linie, die die Lasche unterhalb des Rückenabschnitts andeutet) und der Klettverschluss wird geschlossen. Die Überzieh-Öffnung 4 kann somit im Gebrauchszustand mittels der Lasche 5 und des ausgebildeten Klettverschlusses im mehr oder weniger zusammengezogenen Zustand fixiert werden.

Die Seitenabschnitte 3 des Kopfstützen-Schonbezugs weisen jeweils eine Seiten-Öffnung 7 auf. Diese Seiten-Öffnung 7 ist von der Überzieh-Öffnung 4 getrennt, beispielsweise durch einen vorzugsweise schmalen Steg des Stoffes des Schonbezuges oder durch Zusammennähen der gegenüberliegenden Ränder einer bei der Herstellung des Schonbezuges ausgebildeten größeren Öffnung, welche die Überzieh-Öffnung 4 und die Seiten-Öffnungen 7 umfasst.

Die Seiten-Öffnungen 7 sind vorteilhafterweise gegenüber einer mittigen Anordnung in den Seitenabschnitten 3 nach unten, also in Richtung zur Rückenlehne des Fahrzeugsitzes, verschoben. Vorzugsweise beträgt der Abstand der jeweiligen Seiten-Öffnung 7 von der Überzieh-Öffnung 4 weniger als 10% der Höhe des Seitenabschnitts. Hierbei ist ein Abstand der Seiten-Öffnung 7 vom oberen Ende des Seitenabschnitts von mehr als 30% der Höhe des Seitenabschnitts bevorzugt.

Die Stäbe 8, mittels denen die Kopfstützte an der Rückenlehne befestigt ist, ragen in diesem Ausführungsbeispiel durch die Überzieh-Öffnung 4, und zwar beidseitig der Lasche 5.

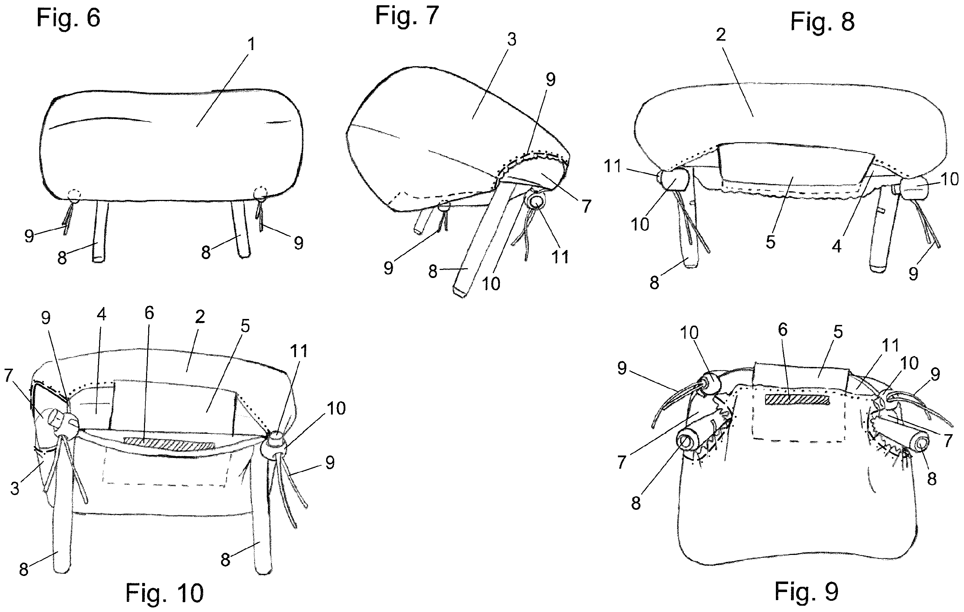

Ein zweites Ausführungsbeispiel der Erfindung ist in den Fig. 6 bis 10 dargestellt. Der Kopfstützen-Schonbezug dient hier zum Beziehen einer Kopfstütze einer Rücksitzbank eines Kraftfahrzeuges, insbesondere PKWs. Im Folgenden werden insbesondere die Unterschiede zum zuvor beschriebenen ersten Ausführungsbeispiel erläutert. Abgesehen von den beschriebenen Unterschieden trifft die Beschreibung des ersten Ausführungsbeispiels zusammen mit den erwähnten möglichen Abwandlungen auch auf das zweite Ausführungsbeispiel zu.

Der Form des Schonbezugs ist an die spezielle Form der Kopfstütze für die Rücksitzbank angepasst.

Ein Unterschied gegenüber dem ersten Ausführungsbeispiel besteht hier darin, dass der Rand einer jeweiligen Seiten-Öffnung 7 einen Tunnelbund aufweist. Durch diesen verläuft zur Ausbildung eines Tunnelzugs eine Schnur 9. Stattdessen könnte auch ein Band verwendet werden. In ihrem Verlauf durch den Tunnelbund ist die Schnur 9 in den Fig. 8, 9 und 10 durch eine gestrichelte Linie angedeutet. Die Schnur 9 oder das stattdessen verwendete Band ist durch ein Verschlusselement 10 zu einem Ring geschlossen. Durch Eindrücken eines Betätigungselements 11 gegen die Kraft einer (in den Fig. nicht sichtbaren) Rückstellfeder können die Schnüre 9 (oder die stattdessen verwendeten Bänder), die sich durch eine Öffnung im Verschlusselement 10 erstrecken, gegenüber dem Verschlusselement verschoben werden. Im losgelassenen Zustand des Betätigungselements 11 sind die Schnüre 9 gegenüber dem Verschlusselement 10 fixiert. Derartige Verschlusselemente 10 sind bekannt und werden auch als Stopper bezeichnet.

Die jeweilige Seiten-Öffnung 7 wird in diesem Ausführungsbeispiel von der Überzieh-Öffnung 4 durch die Schnur 9 (oder das stattdessen verwendete Band) getrennt.

Ein weiterer Unterschied gegenüber dem zuvor beschriebenen ersten Ausführungsbeispiel besteht hier darin, dass die Stäbe 8 der Kopfstütze hier durch die Seiten-Öffnungen 7 geführt sind. Die Seiten-Öffnungen 7 erstrecken sich also bis zur Unterseite des Schonbezugs (wobei sie in diesem Bereich gegenüber der Überzieh-Öffnung 4 vorzugsweise weiter vorne liegen).

Die Stäbe 8 könnten sich auch in diesem Ausführungsbeispiel durch die Überzieh-Öffnung 4 erstrecken. Umgekehrt könnten sich die Stäbe 8 im zuvor beschriebenen ersten Ausführungsbeispiel auch durch die Seiten-Öffnungen 7 erstrecken, wenn diese bis zur Unterseite des Schonbezuges verlaufend ausgebildet würden.

In Fig. 7 ist die Überzieh-Öffnung 4 zur Verdeutlichung relativ weit geöffnet dargestellt. Im Gebrauchszustand kann diese mittels der Lasche 5 und des ausgebildeten Klettverschlusses weiter zusammengezogen sein.

Wie bereits erläutert, könnten auch beim ersten Ausführungsbeispiel die Seiten-Öffnungen 7 in analoger Weise mit einem Tunnelzug ausgebildet sein.

### LEGENDE

### Zu den Hinweisziffern

- 1: Vorderabschnitt
- 2: Rückenabschnitt
- 3: Seitenabschnitt
- 4: Überzieh-Öffnung
- 5: Lasche
- 6: Gegen-Verschlussteil
- 7: Seiten-Öffnung
- 8: Stab
- 9: Schnur
- 10: Verschlusselement
- 11: Betätigungselement

## Patentansprüche

1. Kopfstützen-Schonbezug für eine Kopfstütze eines Kraftfahrzeugsitzes, mit einer Überzieh-Öffnung (4) zum Überziehen des Schonbezugs über die Kopfstütze, wobei der Schonbezug einen Vorderabschnitt (1) zur Anlage an der Vorderseite der Kopfstütze, einen Rückenabschnitt (2) zur Anlage an der Rückseite der Kopfstütze und linke und rechte Seitenabschnitte (3) zur Anlage an der linken und rechten Schmalseite der Kopfstütze aufweist, **dadurch gekennzeichnet, dass** die linken und rechten Seitenabschnitte (3) des Schonbezuges jeweils eine Seiten-Öffnung (7) aufweisen.

2. Kopfstützen-Schonbezug nach Anspruch 1, **dadurch gekennzeichnet, dass** die jeweilige Seiten-Öffnung (7) gegenüber einer mittigen Anordnung im jeweiligen Seitenabschnitt (3) nach unten verschoben ist.

3. Kopfstützen-Schonbezug nach Anspruch 1 oder 2, **dadurch gekennzeichnet, dass** die Seiten-Öffnungen (7) von der Überzieh-Öffnung (4) getrennt sind.

4. Kopfstützen-Schonbezug nach einem der Ansprüche 1 bis 3, **dadurch gekennzeichnet, dass** der Stoff des Schonbezuges um mindestens 50% in alle Richtungen elastisch dehnbar ausgebildet ist.

5. Kopfstützen-Schonbezug nach Anspruch 4, **dadurch gekennzeichnet, dass** die jeweilige Seiten-Öffnung von einer dehnbaren Naht umgeben ist.

6. Kopfstützen-Schonbezug nach Anspruch 4 oder 5, **dadurch gekennzeichnet, dass** die die jeweilige Seiten-Öffnung von einer Überwendlingnaht umgeben ist.

7. Kopfstützen-Schonbezug nach einem der Ansprüche 1 bis 6, **dadurch gekennzeichnet, dass** der Rand einer jeweiligen Seiten-Öffnung (7) einen Tunnelbund aufweist, durch den ein Band oder eine Schnur (9) verläuft, das oder die im Gebrauchszustand des Schonbezuges zu einem Ring geschlossen ist.

8. Kopfstützen-Schonbezug nach Anspruch 7, **dadurch gekennzeichnet, dass** das Band oder die Schnur (9) durch ein Verschlusselement (10) zu einem Ring geschlossen ist.

9. Kopfstützen-Schonbezug nach einem der Ansprüche 1 bis 8, **dadurch gekennzeichnet, dass** von einem Rand der Überzieh-Öffnung (4) zumindest eine Lasche (5) absteht, die ein Verschlussteil eines Klettverschlusses bildet und mit einem im Bereich des gegenüberliegenden Randes der Überzieh-Öffnung angeordneten Gegen-Verschlussteil (6) des Klettverschlusses zusammenwirkt.

10. Kopfstützen-Schonbezug nach einem der Ansprüche 1 bis 9, **dadurch gekennzeichnet, dass** die Überzieh-Öffnung (4) an der Unterseite des Kopfstützen-Schonbezugs angeordnet ist.

## Claims

1. Head support protective cover for a head support of a motor vehicle seat, having a pull-on opening (4) for pulling the protective cover over the head support, the protective cover comprising a front section (1) for attachment to the front side of the head support, a rear section (2) for attachment to the rear side of the head support and left and right side sections (3) for attachment to the left and right narrow sides of the head support, **characterised in that** the left and right side sections (3) of the protective cover each comprise a side opening (7).

2. Head support protective cover according to claim 1, **characterised in that** each side opening (7) is moved downwards in relation to a central arrangement in the respective side section (3).

3. Head support protective cover according to claim 1 or 2, **characterised in that** the side openings (7) are separate from the pull-on opening (4).

4. Head support protective cover according to any of claims 1 to 3, **characterised in that** the material of the protective cover is designed to be elastically stretchable by at least 50% in all directions.

5. Head support protective cover according to claim 4, **characterised in that** each side opening is surrounded by a stretchable seam.

6. Head support protective cover according to claim 4 or 5, **characterised in that** each side opening is surrounded by an overlock seam.

7. Head support protective cover according to any of claims 1 to 6, **characterised in that** the edge of each side opening (7) comprises a casing through which runs a tie or a cord (9) which is secured to form a ring when the protective cover is in use.

8. Head support protective cover according to claim 7, **characterised in that** the tie or the cord (9) is secured to form a ring by means of a fastening element (10).

9. Head support protective cover according to any of claims 1 to 8, **characterised in that** at least one tab (5) protrudes from an edge of the pull-on opening (4), which forms a fastening part of a hook and loop fastener and interacts with a counter-fastening part (6) of the hook and loop fastener arranged in the region of the opposite edge of the pull-on opening.

10. Head support protective cover according to any of claims 1 to 9, **characterised in that** the pull-on opening (4) is arranged on the bottom side of the head support protective cover.

## Revendications

1. Housse de protection d'appui-tête pour un appui-tête d'un siège de véhicule automobile, comprenant une ouverture de mise sous housse (4) pour recouvrir l'appui-tête avec la housse de protection, la housse comprenant une partie avant (1) destinée à venir en contact avec le côté avant de l'appui-tête, une partie arrière (2) destinée à venir en contact avec l'arrière de l'appui-tête et des parties latérales gauche et droite (3) destinées à venir en contact avec les côtés étroits gauche et droit de l'appui-tête, **caractérisée en ce que** les parties latérales gauche et droite (3) de la housse de protection présentent chacune une ouverture latérale (7).

2. Housse de protection d'appui-tête selon la revendication 1, **caractérisée en ce que** l'ouverture latérale respective (7) est décalée vers le bas par rapport à une disposition centrale dans la section latérale respective (3).

3. Housse de protection d'appui-tête selon la revendication 1 ou 2, **caractérisée en ce que** les ouvertures latérales (7) sont séparées de l'ouverture de mise sous housse (4).

4. Housse de protection d'appui-tête selon l'une des revendications 1 à 3, **caractérisée en ce que** le tissu de la housse de protection est conçu de manière à pouvoir être étiré élastiquement d'au moins 50 % dans toutes les directions.

5. Housse de protection d'appui-tête selon la revendication 4, **caractérisée en ce que** l'ouverture latérale respective est entourée d'une couture extensible.

6. Housse de protection d'appui-tête selon la revendication 4 ou 5, **caractérisée en ce que** l'ouverture latérale respective est entourée d'une couture en surjet.

7. Housse de protection d'appui-tête selon l'une des revendications 1 à 6, **caractérisée en ce que** le bord d'une ouverture latérale respective (7) est muni d'une coulisse à travers laquelle passe une bande ou un cordon (9) qui, à l'état d'utilisation de la housse de protection est fermé en formant un anneau.

8. Housse de protection d'appui-tête selon la revendication 7, **caractérisée en ce que** la bande ou le cordon (9) est fermé par un élément de fermeture (10) en formant un anneau.

9. Housse de protection d'appui-tête selon l'une des revendications 1 à 8, **caractérisée en ce qu'**au moins une languette (5) dépasse d'un bord de l'ouverture de mise sous housse (4), laquelle languette forme une partie de fermeture d'une fermeture autoagrippante et qui coopère avec une partie de fermeture complémentaire (6) de la fermeture autoagrippante disposée dans une zone du bord opposé de l'ouverture de mise sous housse.

10. Housse de protection d'appui-tête selon l'une des revendications 1 à 9, **caractérisée en ce que** l'ouverture de mise sous housse (4) est située sur la face inférieure de la housse de protection d'appui-tête.
